# EUROPÄISCHE PATENTSCHRIFT

(11) **EP 4 116 799 B1**
(45) Veröffentlichungstag und Bekanntmachung des Hinweises auf die Patenterteilung: **26.08.2026**
(21) Anmeldenummer: 21184430.3
(22) Anmeldetag: 08.07.2021
(51) Int. Cl.: G06F 3/01, G06T 15/50, G06T 19/00, G06T 19/20

(54) **VORRICHTUNG UND VERFAHREN ZUR BERECHNUNG EINER LICHT- UND/ODER SCHALLWELLENFÜHRUNG IN EINEM AUGMENTED-REALITY-SYSTEM MIT MINDESTENS EINEM OBJEKT**
DEVICE AND METHOD FOR CALCULATING A LIGHT AND / OR ACOUSTIC WAVE GUIDE IN AN AUGMENTED REALITY SYSTEM WITH AT LEAST ONE OBJECT
DISPOSITIF ET PROCÉDÉ DE CALCUL D'UN GUIDAGE DES ONDES LUMINEUSES ET/OU SONORES DANS UN SYSTÈME DE RÉALITÉ AUGMENTÉE COMPORTANT AU MOINS UN OBJET

(43) Veröffentlichungstag der Anmeldung: 11.01.2023
(73) Patentinhaber: Siemens Schweiz AG, 8047 Zürich (CH)
(72) Erfinder: Mayer, Hermann Georg, 83209 Prien am Chiemsee (DE); Zechlin, Oliver, 6300 Zug (CH)
(74) Vertreter: Siemens Patent Attorneys

(56) Entgegenhaltungen:
- WO-A1-2018/118730
- WO-A1-2018/200337
- US-A1- 2018 374 276
- US-A1- 2020 302 681

## Beschreibung

Die Erfindung betrifft eine Vorrichtung und ein Verfahren zur Berechnung einer Licht- und/oder Schallwellenführung in einem Augmented-Reality-System mit mindestens einem Objekt sowie ein zugehöriges Computerprogrammprodukt (siehe unabhängige Ansprüche 1, 9 und 10) Augmented Reality, abgekürzt AR, bzw. "erweiterte Realität" stellt ein junges Gebiet der Technik dar, bei dem beispielsweise einer aktuellen optischen, audiologischen oder ggf. auch haptischen Wahrnehmung der realen Umgebung gleichzeitig zusätzliche visuelle und gegebenenfalls teils audiologische Informationen überlagert werden. Diese Information kann alle menschlichen Sinnesmodalitäten ansprechen. Dabei unterscheidet man grundsätzlich zwischen der sogenannten "see-trough"-Technik, bei der ein Anwender z.B. durch eine lichtdurchlässige Anzeigeeinheit in die reale Umgebung blickt, und die sogenannte "feed-through"-Technik, bei der die reale Umgebung durch eine Aufnahmeeinheit bzw. Erfassungseinrichtung wie beispielsweise eine Kamera aufgenommen und vor der Wiedergabe an einer Ausgabe- bzw. Anzeigeeinheit mit einem computergenerierten virtuellen Bild gemischt bzw. überlagert wird.

Ein Anwender nimmt demzufolge im Ergebnis gleichzeitig sowohl die reale Umgebung als auch die durch beispielsweise Computergrafik erzeugten, virtuellen Bildbestandteile als kombinierte Darstellung (Summenbild) wahr. Diese Vermischung von realen und virtuellen Bildbestandteilen zur "erweiterten Realität" bzw. "augmented reality" ermöglicht dem Anwender, seine Aktionen unter unmittelbarem Einbezug der überlagerten und damit gleichzeitig wahrnehmbaren Zusatzinformationen auszuführen.

Damit eine "erweiterte Realität" möglichst realistisch ist, besteht ein wesentliches Problem in einer Bestimmung der Licht- und/oder Schallwellenführung. Unter einer derartigen Lichtführung kann verstanden werden, dass die virtuellen Beleuchtungsverhältnisse an die realen Beleuchtungsverhältnisse insbesondere durch Einfügen von virtuellen Schatten- und/oder Aufhellbereichen für das einzufügende virtuelle Objekt angepasst werden.

Damit sich die computer-generierten Objekte möglichst natürlich in die reale Umgebung einfügen, ist die Beleuchtung des Objekts wichtig. Hierbei spielt insbesondere die Beleuchtung mit Punkt- und Flächenlichtquellen eine Rolle. Während die diffuse Hintergrundbeleuchtung / Helligkeit über Sensoren am Gerät leicht ermittelt werden kann, stellt die genaue Berechnung der vorhandenen Punkt- und Flächenlichtquellen immer noch eine Herausforderung dar. Diese vermitteln einen entscheidenden Beitrag zu einer realistischen Darstellung der Objekte, indem sie zu Reflektionen am Objekt bzw. für einen realistischen Schattenwurf sorgen. Dies spielt insbesondere dann eine Rolle, wenn die Lichtquelle sich bewegt (z.B. durch vorbeifahrende Fahrzeuge).

Nicht nur die Lichtführung ist für die realistische Darstellung des Objekts entscheidend. Auch die Schallwellenführung, d.h**.** Geräuschausbreitung, -verstärkung, -dämpfung und -überlagerung spielt eine Rolle. Die Schallwellenführung kann durch unterschiedliche Materialien an Objekten und durch die Platzierung der Objekte verändert werden.

Vor allem die Realisierung einer virtuellen Beleuchtung bzw. die Integration von virtuellen Schatten- und/oder Aufhellbereichen in "Augmented-Reality-Systemen" wurde bisher größtenteils nur sehr statisch behandelt, wobei eine Position einer Lichtquelle fest bzw. unveränderbar in das virtuelle 3D-Modell integriert wurde.

Aus Walton et al.: "Synthesis of Environment Maps for Mixed Reality", 2017 IEEE International Symposium on Mixed and Augmented Reality (ISMAR), ist bekannt, in Objekten mit spiegelnder Oberfläche, die unmittelbare Umgebung (die zeitgleich mit einer Kamera aufgenommen wird) zu reflektieren.

Nachteilig ist hierbei, dass Positionsänderungen des Benutzers bzw. der Aufnahmeeinheit oder der Lichtquelle, die unmittelbar auch zu einer Veränderung der Beleuchtungsverhältnisse führen, nicht berücksichtigt werden können.

US 2018/0374276 A1 bezieht sich auf eine 3dimensionale Darstellung einer physikalischen Umgebung, in die virtuelle Objekte eingefügt werden sollen.

WO 2018/118730 A1 offenbart ein Verfahren zum Beleuchten virtueller Objekte umfasst das Erkennen einer dreidimensionalen Darstellung einer physikalischen Umgebung sowie das Erkennen einer dreidimensionalen Weltkoordinaten-Position für ein virtuelles Objekt in der physikalischen Umgebung.

In US 2020/0302681 A1 geht es um eine benutzergesteuerte Interaktion mit einem virtuell erzeugten Raum, in den virtuelle Objekte dargestellt bzw. platziert werden. Die Objektauswahl, welche Objekte zur Raumgestaltung gewählt werden sollen, kann hierbei heuristisch, regelbasiert oder mittels neuronalen Netzes, welches anhand von Katalogen oder früher entworfenen Räumen trainiert wird, vorgeschlagen werden.

WO 2018/200337 A1 bezieht sich auf eine Methode, die globale Belichtungslösung für eine MR-Scene (mixed reality) offenbart.

Die Aufgabe der Erfindung besteht nun darin, die oben genannten Nachteile zu vermeiden und ein möglichst universell einsetzbares Verfahren bzw. eine möglichst universell einsetzbare Vorrichtung zur Darstellung von in eine reale Umgebung eingebetteten virtuellen 3D-Objekten anzugeben.

Die Aufgabe der Erfindung besteht darin, ein gegenüber des eingangs genannten Standes der Technik verbessertes Verfahren sowie eine verbesserte Steuereinrichtung anzugeben.

Diese Aufgabe wird durch die unabhängigen Ansprüche gelöst. Vorteilhafte Weiterbildungen sind Gegenstand der abhängigen Ansprüche.

Die Erfindung beansprucht eine Vorrichtung zur computergestützten Berechnung einer Licht- und Schallwellenführung in einem Augmented-Reality-System mit mindestens einem Objekt, welche eine Recheneinheit umfasst, die eine erweiterte Realität mit dem mindestens einen Objekt sowie Sinneseindrücke von dem mindestens einem Objekt darstellt und auf einer Ausgabeeinheit des Augmented-Reality-Systems für einen Nutzer darstellt, wobei die Recheneinheit mit einer Erfassungseinrichtung zum Erfassen eines ersten Umgebungsbereiches gekoppelt ist, in den das mindestens eine Objekt dargestellt wird, dadurch gekennzeichnet, dass
- die Sinneseindrücke, welche visuell und audiologisch ausgeprägt sind, durch die Berechnung der Licht- und/oder Schallwellenführung in einer abgegrenzten Umgebung durch die Vorrichtung ergänzt werden,
- wobei die Licht- und Schallwellenführung mit Hilfe eines vorgebbaren und/oder simulierbaren 3D-Metamodells der abgegrenzten Umgebung berechnet wird, das einen zweiten Umgebungsbereich mit darin angeordneten Objekten, den ersten Umgebungsbereich mit dem mindestens einem abgebildeten Objekt und einen oder mehrere identifizierbare licht- und schalldurchlässige Bereiche zwischen dem zweiten und dem ersten Umgebungsbereich umfasst, wobei der erste Umgebungsbereich einen Innenbereich einer solchen abgegrenzten Umgebung umfasst und der zweite Umgebungsbereich einen Außenbereich der abgegrenzten Umgebung umfasst,
- wobei zur Berechnung der Licht- und Schallwellenführung Lichtquellen im zweiten Umgebungsbereich, eine wetterbedingte Helligkeit im zweiten Umgebungsbereich zu einer vorgebbaren und/oder simulierten Tages- und Jahreszeit und Geräusche von Geräuschquellen im zweiten Umgebungsbereich zu einer vorgebbaren und/oder simulierten Tages- und Jahreszeit, der Licht- und/oder
- Schalleinfallswinkel durch den oder die licht- und schalldurchlässigen Bereiche auf das mindestens eine Objekt sowie Lichtintensität von weiteren Lichtquellen und Geräuschstärke von weiteren Geräuschquellen im ersten Umgebungsbereich einbezogen werden, wobei Wetterdaten berücksichtigt werden, welche die wetterbedingte Helligkeit beeinflussen und Geräusche von Geräuschquellen im zweiten Umgebungsbereich dämpfen. Zudem ist das 3D-Metamodell als vollständiger oder Teil-Wissensgraph dargestellt, welcher mindestens einen Zweig von jenen, den Wissensgraphen - durch Verbindung enthaltener Knoten gebildeten - bildenden Zweigen umfasst und gemeinsam mit vom 3D-Metamodell abgeleiteten geometrischen Beziehungen gespeichert wird, wobei der Wissensgraph vorab auf Grundlage einer vorbereiteten, auf digitalen Daten beruhenden Repräsentation der Umgebungsbereiche und/oder der licht- und/oder schalldurchlässigen Bereiche gebildet ist und gegebenenfalls gespeichert wird, wobei der Wissensgraph mit einem Beleuchtungsmodell mittels eines datenbasierten Lernverfahrens erweitert werden kann, wobei der Nutzer eine Rückmeldung (F) hinsichtlich seines subjektiven Sinneseindrucks von der berechneten Lichtführung für das mindestens eine Objekt an das Lernverfahren zurückgibt.

Visuelle Sinneseindrücke bezeichnen die Wahrnehmung über die die Augen, während audiologische Sinneseindrücke durch das Gehör wahrgenommen werden.

Eine abgegrenzte Umgebung kann ein Bauwerk, Gebäude, Schiff, Flugzeug oder Auto sein. Der erste Umgebungsbereich umfasst in der Regel den Innenbereich einer solchen abgegrenzten Umgebung. Der zweite Umgebungsbereich umfasst in der Regel den Aussenbereich der abgegrenzten Umgebung. Licht- und Schalldurchlässige Bereiche können Fenstern, Luftschächte, Rohrsysteme, Gullis sein. Lichtquellen können Sonne, Laternen, Lampen etc. sein. Geräuschsquellen können Tiere, Geräte, aber auch starker Regen sein.

Eine Erfassungseinrichtung kann ein oder mehrere Kameras z.B. Lightfield, Lidar-Kamera umfassen. Als Erfassungseinrichtung kommen auch andere Sensoren z.B. Mikrophone etc. in Frage.

Erfindungsgemäß wird eine Lichtführungs- bzw. Schallwellenführungssimulation mit Hilfe eines in AR nicht sichtbaren 3D-Modells mit der Anzeige eines Objekts auf dem AR-System verknüpft bzw. gekoppelt. Die Darstellung des Objekts wird dadurch realistisch und damit die Immersion des Benutzers erhöht. Bei AR-System, auf denen reale Objekte mit einer Kamera erfasst und auf einer Ausgabeeinheit z.B. Display dargestellt werden (z.B. Fahrzeugbildschirm, iPad) kann dies hin zu einem nicht mehr erkennbaren Unterschied zwischen realen und gerenderten Objekten führen. Aber auch für Geräte, mit denen die Realität direkt sichtbar ist (see-thru Display, Hololens) ist eine wesentliche Verbesserung der Darstellung der abgebildeten Objekte gegeben.

Der tages- und jahreszeitabhängige Sonnenstand kann den Lichteinfallswinkel durch den oder die lichtdurchlässigen Bereiche beeinflussen.

Das 3D-Metamodell kann eine Meta-Perspektive auf die genannten Bereiche außerhalb eines durch die Erfassungseinrichtung erfassbaren ersten Umgebungsbereichs einnehmen.

Die Helligkeit und/oder Geräusche von Geräuschquellen im ersten Umgebungsbereich kann von der Erfassungseinrichtung erfasst werden.

Bei der Berechnung der Licht- und Schallwellenführung in Bezug auf das mindestens eine Objekt kann eine Absorption bzw. eine Reflexion von Licht und Schall durch vorgeordnet liegende Objekte im Licht- und im Schallausbreitungskegel durch den licht- und schalldurchlässigen Bereich hindurch berücksichtigt werden.

Das 3D-Metamodell kann ein Gebäude in einer Umgebung modellieren, wobei der erste Umgebungsbereich den Innenbereich, der zweite Umgebungsbereich den Außenbereich und die licht- und/oder schalldurchlässige Bereiche in der Abgrenzung Fenster in der Wand des Gebäudes darstellen können.

Vorzugsweise wird das 3D-Metamodell durch ein BIM-Modell (Building Information Modelling) repräsentiert. Es kann auch durch eine Punktwolke repräsentiert werden.

Ein weiterer Aspekt der Erfindung sieht ein Verfahren zur computergestützten Berechnung einer Licht- und Schallwellenführung in einem Augmented-Reality-System mit mindestens einem Objekt vor, wobei eine Vorrichtung zur computergestützten Berechnung eine Recheneinheit umfasst, die eine erweiterte Realität mit dem mindestens einen Objekt sowie Sinneseindrücke von dem mindestens einem Objekt auf einer Ausgabeeinheit des Augmented-Reality-Systems für einen Nutzer darstellt, wobei die Recheneinheit mit einer Erfassungseinrichtung zum Erfassen eines ersten Umgebungsbereiches gekoppelt ist, in den das mindestens eine Objekt dargestellt wird, dadurch gekennzeichnet, dass
- die Sinneseindrücke, welche visuell und audiologisch ausgeprägt sind, durch die Berechnung der Licht- und Schallwellenführung in einer abgegrenzten Umgebung ergänzt werden,
- wobei die Licht- und Schallwellenführung mit Hilfe eines vorgebbaren und/oder simulierbaren 3D-Metamodells der abgegrenzten Umgebung berechnet wird, das einen zweiten Umgebungsbereich mit darin angeordneten Objekten, den ersten Umgebungsbereich mit dem mindestens einem abgebildeten Objekt und einen oder mehrere identifizierbare licht- und schalldurchlässige Bereiche zwischen dem zweiten und dem ersten Umgebungsbereich umfasst, wobei der erste Umgebungsbereich einen Innenbereich einer solchen abgegrenzten Umgebung umfasst und der zweite Umgebungsbereich einen Außenbereich der abgegrenzten Umgebung umfasst,
- wobei zur Berechnung der Licht- und Schallwellenführung Lichtquellen im zweiten Umgebungsbereich, eine wetterbedingte Helligkeit im zweiten Umgebungsbereich zu einer vorgebbaren und/oder simulierten Tages- und Jahreszeit und Geräusche von Geräuschquellen im zweiten Umgebungsbereich zu einer vorgebbaren und/oder simulierten Tages- und Jahreszeit, der Licht- und/oder -Schalleinfallswinkel durch den oder die licht- und schalldurchlässigen Bereiche auf das mindestens eine Objekt sowie Lichtintensität von weiteren Lichtquellen und Geräuschstärke von weiteren Geräuschquellen im ersten Umgebungsbereich einbezogen werden, wobei Wetterdaten berücksichtigt werden, welche die wetterbedingte Helligkeit beeinflussen und Geräusche von Geräuschquellen im zweiten Umgebungsbereich dämpfen. Zudem ist das 3D-Metamodell als vollständiger oder Teil-Wissensgraph dargestellt, welcher mindestens einen Zweig von jenen, den Wissensgraphen - durch Verbindung enthaltener Knoten gebildeten - bildenden Zweigen umfasst und gemeinsam mit vom 3D-Metamodell abgeleiteten geometrischen Beziehungen gespeichert wird, wobei der Wissensgraph vorab auf Grundlage einer vorbereiteten, auf digitalen Daten beruhenden Repräsentation der Umgebungsbereiche und/oder der licht- und/oder schalldurchlässigen Bereiche gebildet ist und gegebenenfalls gespeichert wird, wobei der Wissensgraph mit einem Beleuchtungsmodell mittels eines datenbasierten Lernverfahrens erweitert werden kann, wobei der Nutzer eine Rückmeldung (F) hinsichtlich seines subjektiven Sinneseindrucks von der berechneten Lichtführung für das mindestens eine Objekt an das Lernverfahren zurückgibt.

Die Einheiten bzw. die Ein- /Vorrichtung, die dazu eingerichtet sind, solche Verfahrensschritte auszuführen, können hardware-, firmware- und/oder softwaremäßig implementiert sein.

Ein weiterer Aspekt der Erfindung ist ein Computerprogramm(-produkt) mit Programmcodemitteln zur Durchführung des Verfahrens nach einem der vorangehenden Verfahrensansprüche, wenn es auf einem Computer bzw. einer Recheneinheit der oben genannten Art abläuft oder auf einem computerlesbaren Speichermedium gespeichert ist.

Das Computerprogramm bzw. -produkt kann auf einem computerlesbaren Speichermedium gespeichert sein. Das Computerprogramm bzw. -produkt kann in einer üblichen Programmiersprache (z.B. C++, Java) erstellt sein. Die Verarbeitungseinrichtung kann einen marktüblichen Computer oder Server mit entsprechenden Eingabe-, Ausgabe- und Speichermitteln umfassen. Diese Verarbeitungseinrichtung kann in der Steuereinrichtung oder in deren Mitteln integriert sein.

Das Verfahren sowie das Computerprogramm(-produkt) können analog zur oben genannten Vorrichtung und dessen Weiterbildungen weiter- bzw. ausgebildet sein.

Weitere Vorteile, Einzelheiten und Weiterbildungen der Erfindung ergeben sich aus der nachfolgenden Beschreibung von Ausführungsbeispielen in Verbindung mit den Zeichnungen.
Figur 1 zeigt schematisch ein Ausführungsbeispiel der Erfindung, bei dem Objekte im Sicht- bzw. Erfassungsfeld des AR-Systems platziert werden, damit eine Beleuchtung des Objektes berechnet werden kann, und
Figur 2 zeigt schematisch ein weiteres Ausführungsbeispiel der Erfindung, bei dem Beleuchtungsberechnung zusätzlich verbessert werden kann.

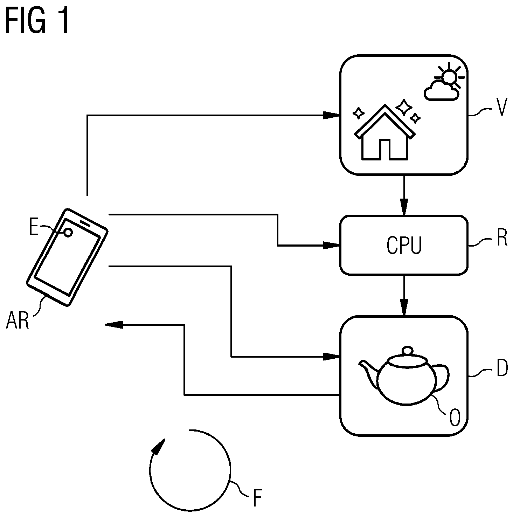

Figur 1 zeigt ein AR-System AR, welches eine Erfassungseinrichtung E aufweist. Dieses kann ein mobiles Gerät oder auch eine AR-Brille sein. Die Erfassungseinrichtung kann eine Kamera (z.B. Lichtfiel, Lidar) und/oder ein Microphone oder ein anderer Sensor sein. Zudem wird eine Vorrichtung V zur computergestützten Berechnung einer Beleuchtung von einem Objekt O in einem AR-System AR gezeigt, die eine Recheneinheit R mit einer CPU umfasst oder mit dieser gekoppelt ist, welche eine erweiterte Realität mit audiologischen bzw. visuellen Sinneseindrücken von dem mindestens einem Objekt darstellt und auf einer Ausgabeeinheit **z.B.** einem Display D eines Smartphones, Tabletts oder AR-Brille an einen Nutzer ausgibt. Das Objekt - im Beispiel eine abgebildete Teekanne - befindet sich in einer abgegrenzten Umgebung. Diese Umgebung kann ein Bauwerk, fertiges Gebäude, Schiff, Flugzeug oder Auto sein. Mit der Erfassungseinrichtung kann das Objekt in einem ersten Umgebungsbereich der abgegrenzten Umgebung erfasst werden. Der erste Umgebungsbereich kann hierbei der Innenbereich der abgegrenzten Umgebung z.B. ein Gebäude sein. Zudem gibt es einen zweiten Umgebungsbereich der abgegrenzten Umgebung. Dieser kann der Außenbereich des Gebäudes sein. Das folgende Ausführungsbeispiel konzentriert sich auf ein Gebäude mit Außen- und Innenbereich ohne Beschränkung darauf. Eine Abgrenzung vom ersten und zweiten Umgebungsbereich oder umgekehrt, kann im folgenden eine Wand oder auch eine Art Zaun sein. Verschiedene Varianten sind denkbar. Es gibt zudem licht- bzw. schalldurchlässige Bereiche z.B. Fenster, Schächte, Rohrsysteme zwischen dem zweiten und dem ersten Umgebungsbereich, welche in der Abgrenzung bzw. Wand angeordnet sein können.

Gebäude können als 3D-(Meta)modelle dargestellt werden und hierzu die Modelldaten in Dateien zu speichern.

Die bekanntesten digitale Bauwerks-/Gebäudemodelle sind die sogenannten BIM-Modelle (abgekürzt BIM: Building Information Modelling, deutsch: Bauwerksdatenmodellierung). Die internationale Organisation buildingSMART hat das Ziel, offene Standards (openBIM) für den Informationsaustausch und die Kommunikation auf der Basis von Building Information Modeling zu etablieren. Die Industry Foundation Classes" (IFC) oder einem Derivat hiervon hat ein Standardformat für ein so genanntes "Building Information Modeling" (BIM) entwickelt und bildet sie weiter. Ein solches Format wäre beispielsweise das BIM-IFC Format, welches gemäß entsprechender so genannter "Object Windows Library", (OWL)-Spezifikation gebildet wird.

Derartige BIM-Modelle enthalten in der Regel ein detailliertes 3-D-Metamodell des Gebäudes mit unterschiedlichen Ansichten und zusammen mit semantischen Angaben, die die einzelnen Gebäudeelemente des Gebäudes, zum Beispiel Wände, Decken, Böden, Fenster, Türen, Treppen oder Pfeiler sowie deren Beziehungen zueinander beschreiben. Diese semantischen Angaben bzw. Daten können beispielsweise als Wissensgraph insbesondere nach dem oben genannten Format aufbereitet werden.

Das 3D-Metamodell mit semantischen Angaben ist als vollständiger oder Teil-Wissensgraph darstellbar. Der Wissensgraph umfasst mindestens ein Zweig von jenen, den Wissensgraphen - durch Verbindung enthaltener Knoten gebildeten - bildenden Zweigen und wird gemeinsam mit vom 3D-Metamodell abgeleiteten geometrischen Beziehungen gespeichert, wobei der Wissensgraph vorab auf Grundlage einer vorbereiteten, auf digitalen Daten beruhenden Repräsentation der Umgebungsbereiche und/oder der licht- bzw. schalldurchlässigen Bereiche gebildet ist und gegebenenfalls gespeichert wird.

Oft werden auch Punktwolken aus Scans durch eine Aufnameeinheit von Bestandsgebäuden, die in Kacheln (englisch "Tiles") zerlegt werden können, auf diese Weise verwaltet. Dies geht bis hin zur Erzeugung von sogenannten digitalen Zwillingen von Gebäuden.

Als weiterer Trend werden die Gebäudedaten zunehmend zentral z.B. in einer Cloud-Plattform abgelegt, sodass mehrere Benutzer gleichzeitig auf die Daten zugreifen können.

Die Darstellung eines Gebäudes in einem digitalen Gebäudemodell gibt in der Regel einen geplanten Zustand des Gebäudes wieder. Danach soll das Gebäude so erstellt werden, dass seine Gebäudeelemente möglichst deckungsgleich mit ihrer Darstellung im Gebäudemodell sind.

Mit Hilfe eines solchen BIM-Modells kann zunächst der Beitrag von wetterbedingter Helligkeit und/oder Geräuschen von Geräuschquellen im Außenbereich zu einer vom Nutzer vorgebbaren und/oder simulierten Tages- und Jahreszeit, welcher durch einen oder mehrere licht-/schalldurchlässige Bereiche in den Innenbereich dringt, zur Beleuchtung des Objektes berechnet werden.

Das 3D-Metamodell (BIM und/oder Punktwolke) nimmt eine Meta-Perspektive auf die genannten Bereiche außerhalb eines durch die Erfassungseinrichtung erfassbaren ersten Umgebungsbereichs ein. D.h. im AR-System wird das eigentliche Gebäudemodell mit dem Außenbereich gar nicht angezeigt, da im AR-System die tatsächliche Umgebung, im Beispiel der Innenbereich zu sehen ist, in die dann das virtuelle Objekt platziert wird.

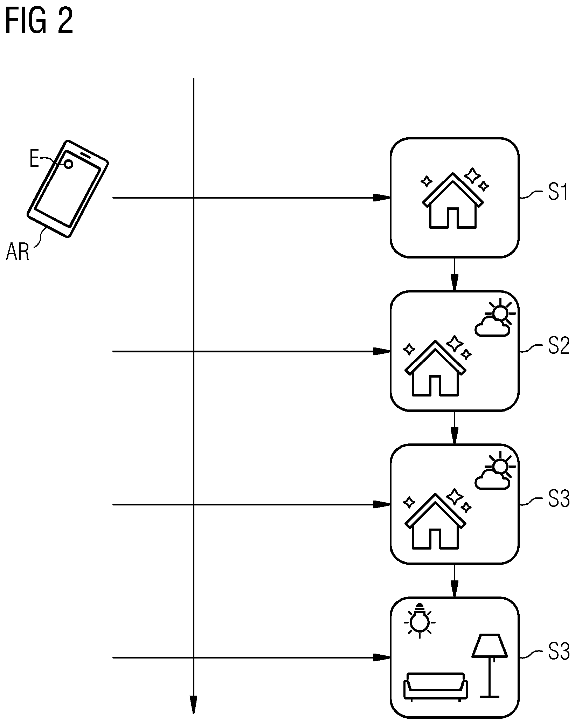

Der Beitrag von Sonnenlicht, das vom Außen- in den Innenbereich einfällt, beeinflusst hierbei die Beleuchtung des Objekts. Beispielsweise kann mit einer bekannten Software Auto-Desk Revit (https://www.autodesk.de/products/revit/over-view?term=1-YEAR), die in die Vorrichtung V integriert sein kann, sich unter Kenntnis des geographischen Standpunkts des Gebäudes und eines gegebenen Datums (bzw. Zeitraums), eine hypothetische Stellung (bzw. Laufbahn) der Sonne um das Gebäude berechnen. Darauf basierend kann eine Licht- bzw. Schallwellenführung mittels Beleuchtungs- bzw. Schallausbreitungsberechnung bzw. -simulation durchgeführt werden. Dieser Schritt ist in Figur 2 mit S1 gekennzeichnet.

Der tages- und jahreszeitabhängige Sonnenstand kann nur den Lichteinfallswinkel durch den/die lichtdurchlässigen Bereiche beeinflussen, sondern auch auf Geräusche Einfluss haben, die zu einer bestimmten Tages- und Jahreszeit Geräusche von Tieren im Außenbereich zu hören sind und durch die schalldurchlässigen Bereiche in den Innenbereich eindringen.

Dabei können auch unterschiedliche Materialien für Fenster berücksichtigt werden, oder indirekte Beleuchtung, die durch Streuung an Wänden oder spiegelnden Oberflächen verursacht wird. Gemäß Schritt S2 in Figur 2 können zudem Wetterdaten berücksichtigt werden, welche z.B. durch Wolken, Regen etc. die Helligkeit beeinflussen, aber auch Geräusche dämpfen können.

Damit dieses Verfahren auch mit Punktwolken genutzt werden kann, sind Vorverarbeitungsschritte sinnvoll. Diese sorgen dafür, dass die Fenster eindeutig identifiziert werden können und entsprechend korrekt in der Berechnung berücksichtigt werden. Fenster können auch zusätzlichen Schall durchlassen. Um die Fenster, also eine Lichtquelle, identifizieren zu können, kann wie folgt vorgegangen werden:
Es wird derselbe Bildausschnitt mehrfach aus verschiedenen Blickwinkeln aufgenommen wird. Befinden sich in diesem Bildausschnitt Reflexionen, die durch Lichtquellen verursacht werden, so wandern diese entsprechend der Aufnahmerichtung mit. Das Vorhandensein einer Lichtquellenreflexion lässt sich mit Hilfe einer Histogramm-Analyse feststellen. Betrachtet man dafür jedoch nur eine einzelne Aufnahme, so kann i.d.R. ein Helligkeitsunterschied nicht eindeutig einer Reflexion zugeordnet werden, sondern könnte sich auch aufgrund unterschiedlicher Färbung oder Oberflächenbeschaffenheit ergeben. Erst dadurch, dass die Reflexion, die zeitgleich aus unterschiedlichen Positionen aufgenommen bzw. erfasst wurde, quasi über die Oberfläche wandert, kann ein Helligkeitsunterschied entsprechend interpretiert werden. Im Gegensatz zu einer Reflexion bleibt ein material-basierter Helligkeitsunterschied ortsstabil. Wurde eine Reflexion eindeutig identifiziert, so kann man unter Kenntnis der Kameraposition und der Objektoberfläche auf die Position (bzw. zumindest die Richtung) der Lichtquelle schließen. Dazu wird eine Tiefenkarte der Umgebung (Point-Cloud, 3D-Metamodell) erstellt und verwendet, die mit einem geeigneten Sensor z.B. Lidar-Sensor oder plenoptische Kamera erfasst wurde. Der einfallende Strahl von der Reflexion in die Kamera wird dazu an der Oberflächennormale gespiegelt. Der gespiegelte Strahl zeigt nun von der Oberfläche ausgehend auf die Lichtquelle, deren Entfernung aber nicht weiter bestimmt werden kann. In der Regel kann aber davon ausgegangen werden, dass die Lichtquelle im Verhältnis zum betrachteten Objekt weit entfernt liegt, sodass zunächst eine physikalisch sinnvolle Entfernung gewählt werden kann. Für den Fall, dass eine Reflexion in mehreren Objekten gefunden werden kann, kann ein Schnittpunkt der entsprechenden Projektionen bestimmt werden. Dadurch lässt sich auf die genaue Position der Lichtquelle schließen, sofern es sich nicht um mehrere Lichtquellen handelt.

Zudem können Artefakte entfernt, die durch Reflexion in den Fensterscheiben entstanden sind. Würden diese als echte Objekte aufgefasst werden, würden sie einen Teil der einfallenden Lichtstrahlen bzw. eindringenden Schall blockieren.

Schallreflexionen- bzw. -dämpfungen können ggf. durch eine Tonfrequenzsprektrumsanalyse z.B. mittels Fast Fourier Transformation festgestellt werden.

Eine weitere Ausführungsform der Erfindung sieht vor, Objekte zu identifizieren, die sich auf die Lichtführung bzw. Beleuchtung im Gebäude auswirken. Eine Absorption bzw. eine Reflexion von Licht bzw. Schall durch dem Objekt O vorgeordnet liegende Objekte im Licht- bzw. im Schallausbreitungskegel durch den licht- bzw. schalldurchlässigen Bereich hindurch sollte berücksichtigt werden. Dieses Absorption/Reflexion kann durch Wolken, Bäume im Außenbereich oder auch durch Gegenstände im Innenbereich hervorgerufen werden.

Insbesondere Lampen und spiegelnde Oberflächen, damit diese für die Berechnung mit entsprechenden Materialien ausgestattet werden können. In detaillierten Simulatoren kann auch die jahreszeitliche Belaubung von Bäumen in der Berechnung mitberücksichtigt werden. Diese Information wird in Punktwolken i.d.R. manuell eingefügt (zumindest die Baumart). Ansonsten kann für diese Aufgabe Objekterkennungsverfahren in Punktwolken verwendet werden. Mit dieser Information wird nun ein Basis-Beleuchtungs- bzw. Tonfrequenzmodell berechnet werden.

Insbesondere wenn die Beleuchtung durch direkte Sonneneinstrahlung dominiert wird, kann die Bewölkung eine wichtige Rolle spielen. Diese Information kann entweder über Wetter-Server bezogen werden (i.d.R. ungenau, insbesondere bei leichter Bewölkung) oder aber direkt von Sensoren im/am Gebäude stammen (z.B. Außenkameras).

Da diese und weitere Einflussfaktoren, wie z.B. die Belaubung von Bäumen vor Fenstern, nicht so genau vorherberechnet werden können, kann das so entstandene Beleuchtungs- bzw. Tonfrequenzmodell mit Hilfe von Belichtungsmessern und sensiblen Mikrophonen am VR-System (z.B. von der Handy-Kamera) kalibriert werden. Dazu wird die zu erwartende Beleuchtung/Lautstärke am AR-System (laut Beleuchtungs- bzw. Tonrequenzmodell) mit der tatsächlich gemessenen verglichen und das Beleuchtungs- Tonfrequenzmodell ggf. entsprechend angepasst, das in Schritt S3 in Figur 2 für die Beleuchtung angedeutet wird.

Mit natürlicher Beleuchtung bzw. Geräuschsbildung kann ein sehr realistisches Beleuchtungs- bzw. Tonfrequenzmodell berechnet werden, das eine deutlich verbesserte Darstellung von Objekten in AR-Geräten gegenüber dem eingangs genannten Stand der Technik erlaubt. Allerdings wird die Beleuchtung in Gebäuden (zumindest abends und in Wintermonaten) oft von künstlicher Beleuchtung dominiert. Je nach Güte der erfassten Daten und der verfügbaren Sensoren kann aber auch diese in das Beleuchtungsmodel mit einfließen. In detaillierten BIM-Modellen sind i.d.R. die Position und der Typ (inkl. Lichtstärke) aller Lichtquellen, vor allem Lampen, verzeichnet. Mit Einschränkungen können Lampen usw. auch in der Punktwolke erkannt und eingetragen werden (ggf. manuell). Eine Herausforderung ist es allerdings den aktuellen Zustand der Innenbeleuchtung festzustellen. Im Zweifelsfall kann angenommen werden, dass bei einer bestimmten gemessenen Beleuchtungsstärke oder zu gewissen Tageszeiten (abhängig von der Jahreszeit) alle Lampen an sind. Genauere Aussagen (für eine Spot-Beleuchtung) lassen sich dann treffen, wenn die Beleuchtung über das Gebäudemanagementsystem oder eine andere zugreifbare Applikation gesteuert wird (z.B. Comfy-App). Dann kann die Aktivität einzelner Lampen mit in das Beleuchtungsmodell integriert werden. Alternativ könnte die Aktivität der Lampen auch mit Kameras/IR-Sensoren am AR-System erkannt werden, dafür müssten sie sich aber im Sichtkegel des Systems befinden (z.B. keine Beleuchtung von hinten).

Werden nun vom Benutzer oder einer Applikation Objekte im Sichtfeld des AR-Geräts platziert, so kann deren Darstellung mit dem aktuell berechneten Beleuchtungsmodell berechnet werden. Optional kann der Benutzer dann manuelle Anpassungen vornehmen, z.B. aus dem BIM-Modell bekannte Licht- bzw. Geräuchsquellen aus/anschalten oder die Intensität der Beleuchtung bzw. die Lautstärke ändern.

Maßnahmen, die zu einer subjektiven Verbesserung der Beleuchtung des Objekts führen, können mittels eines datenbasierten Lernverfahrens genutzt werden, um die Beleuchtung des Objekts zu optimieren. Dazu kann der Wissensgraph mit einem Beleuchtungsmodell mittels des datenbasierten Lernverfahrens erweitert werden, wobei der Nutzer eine Rückmeldung F hinsichtlich seines subjektiven Sinneseindrucks von der berechneten Beleuchtung für das Objekt O an das Lernverfahren zurückgibt. Auch die Geräuschsentwicklung um das Modell herum kann durch ein Lernverfahren analog wie bei der Beleuchtung verbessert werden.

Die Ergebnisse des Lernverfahrens können nutzerspezifisch dann auf andere Objekte in der Nähe übertragen werden (ggf. kann die Kalibrierung auch mit anderen Nutzern ausgetauscht werden, wenn sie nutzerunspezifische Anpassungen an der Beleuchtung betrifft - z.B. Reduktion der Helligkeit aufgrund von Laubbäumen vor dem Fenster - die bisher nicht im Modell enthalten waren).

Zusätzlich ist die Anwendung des Verfahrens auf "sound rendering" möglich. Dabei können in die Darstellung von Schall-/Geräuschsquellen Hindernisse mit einbezogen werden, die aus einem 3-D-Meta-Modell (BIM-Modell oder einer Punktwolke) stammen, und an denen Schallwellen reflektiert oder abgeschwächt werden (z.B. Schallquelle liegt hinter einem Hindernis und wird zunächst leise dargestellt, bei Bewegung um das Hindernis dann in normaler Lautstärke).

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe/-schritte kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Unter "rechner-/computergestützt" kann im Zusammenhang mit der Erfindung beispielsweise eine Implementierung des Verfahrens verstanden werden, bei dem insbesondere ein Prozessor, der Teil der Steuerungs-/Rechenvorrichtung bzw. -einheit sein kann, mindestens einen Verfahrensschritt des Verfahrens ausführt.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein. Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

## Patentansprüche

1. Vorrichtung (V) zur computergestützten Berechnung einer Licht- und Schallwellenführung in einem Augmented-Reality-System (AR) mit mindestens einem Objekt (O), welche eine Recheneinheit (R) umfasst, die eine erweiterte Realität mit dem mindestens einen Objekt sowie Sinneseindrücke von dem mindestens einem Objekt auf einer Ausgabeeinheit (D) des Augmented-Reality-Systems für einen Nutzer darstellt, wobei die Recheneinheit mit einer Erfassungseinrichtung (E) zum Erfassen eines ersten Umgebungsbereiches gekoppelt ist, in dem das mindestens eine Objekt dargestellt wird,
- wobei die Sinneseindrücke, welche visuell und audiologisch ausgeprägt sind, durch die Berechnung der Licht- und Schallwellenführung in einer abgegrenzten Umgebung durch die Vorrichtung ergänzt werden,
- wobei die Licht- und Schallwellenführung mit Hilfe eines vorgebbaren und/oder simulierbaren 3D-Metamodells der abgegrenzten Umgebung berechnet wird, das einen zweiten Umgebungsbereich mit darin angeordneten Objekten, den ersten Umgebungsbereich mit dem mindestens einem abgebildeten Objekt und einen oder mehrere identifizierbare licht- und schalldurchlässige Bereiche zwischen dem zweiten und dem ersten Umgebungsbereich umfasst, wobei der erste Umgebungsbereich einen Innenbereich einer solchen abgegrenzten Umgebung umfasst und der zweite Umgebungsbereich einen Außenbereich der abgegrenzten Umgebung umfasst,
- wobei zur Berechnung der Licht- und Schallwellenführung Lichtquellen im zweiten Umgebungsbereich, eine wetterbedingte Helligkeit im zweiten Umgebungsbereich zu einer vorgebbaren und/oder simulierten Tages- und Jahreszeit und Geräusche von Geräuschquellen im zweiten Umgebungsbereich zu einer vorgebbaren und/oder simulierten Tages- und Jahreszeit, der Licht- und/oder -Schalleinfallswinkel durch den oder die licht- und schalldurchlässigen Bereiche auf das mindestens eine Objekt sowie Lichtintensität von weiteren Lichtquellen und Geräuschstärke von weiteren Geräuschquellen im ersten Umgebungsbereich einbezogen werden, wobei Wetterdaten berücksichtigt werden, welche die wetterbedingte Helligkeit beeinflussen und Geräusche von Geräuschquellen im zweiten Umgebungsbereich dämpfen,
wobei das 3D-Metamodell als vollständiger oder Teil-Wissensgraph dargestellt ist, welcher mindestens einen Zweig von jenen, den Wissensgraphen - durch Verbindung enthaltener Knoten gebildeten - bildenden Zweigen umfasst und gemeinsam mit vom 3D-Metamodell abgeleiteten geometrischen Beziehungen gespeichert wird, wobei der Wissensgraph vorab auf Grundlage einer vorbereiteten, auf digitalen Daten beruhenden Repräsentation der Umgebungsbereiche und/oder der licht- und/oder schalldurchlässigen Bereiche gebildet ist und gegebenenfalls gespeichert wird, wobei der Wissensgraph mit einem Beleuchtungsmodell mittels eines datenbasierten Lernverfahrens erweitert werden kann, wobei der Nutzer eine Rückmeldung (F) hinsichtlich seines subjektiven Sinneseindrucks von der berechneten Lichtführung für das mindestens eine Objekt an das Lernverfahren zurückgibt.

2. Vorrichtung nach dem vorhergehenden Anspruch, **dadurch gekennzeichnet, dass** der tages- und jahreszeitabhängige Sonnenstand den Lichteinfallswinkel durch den oder die lichtdurchlässigen Bereiche beeinflusst.

3. Vorrichtung nach einem der vorhergehenden Ansprüche, **dadurch gekennzeichnet, dass** das 3D-Metamodell eine Meta-Perspektive auf diegenannten Bereiche außerhalb eines durch die Erfassungseinrichtung erfassbaren ersten Umgebungsbereichs einnimmt.

4. Vorrichtung nach einem der vorhergehenden Ansprüche, **dadurch gekennzeichnet, dass** die Helligkeit und/oder Geräusche von Geräuschquellen im ersten Umgebungsbereich von der Erfassungseinrichtung erfasst werden.

5. Vorrichtung nach einem der vorhergehenden Ansprüche, **dadurch gekennzeichnet, dass** bei der Berechnung der Licht- und Schallwellenführung in Bezug auf das mindestens eine Objekt eine Absorption bzw. eine Reflexion von Licht und/oder Schall durch vorgeordnet liegende Objekte im Licht- und/oder im Schallausbreitungskegel durch den licht- und schalldurchlässigen Bereich hindurch berücksichtigt wird.

6. Vorrichtung nach einem der vorhergehenden Ansprüche, **dadurch gekennzeichnet, dass** das 3D-Metamodell ein Gebäude in einer Umgebung modelliert, wobei der erste Umgebungsbereich den Innenbereich des Gebäudes, der zweite Umgebungsbereich den Außenbereich des Geäbudes und die licht- und schalldurchlässige Bereiche in der Abgrenzung Fenster in der Wand des Gebäudes darstellen.

7. Vorrichtung nach einem der vorhergehenden Ansprüche, **dadurch gekennzeichnet, dass** das 3D-Metamodell durch ein Building-Information-Modelling-Modell, abgekürzt BIM, repräsentiert wird.

8. Vorrichtung nach einem der vorhergehenden Ansprüche, **dadurch gekennzeichnet, dass** das 3D-Metamodell durch eine Punktwolke repräsentiert wird.

9. Verfahren zur computergestützten Berechnung einer Licht- und Schallwellenführung in einem Augmented-Reality-System (AR) mit mindestens einem Objekt (O), wobei eine Vorrichtung für die computergestützten Berechnung eine Recheneinheit (R) umfasst, die eine erweiterte Realität mit dem mindestens einen Objekt sowie Sinneseindrücke von dem mindestens einem Objekt auf einer Ausgabeeinheit (D) des Augmented-Reality-Systems für einen Nutzer darstellt, wobei die Recheneinheit mit einer Erfassungseinrichtung (E) zum Erfassen eines ersten Umgebungsbereiches gekoppelt ist, in dem das mindestens eine Objekt dargestellt wird,
- wobei die Sinneseindrücke, welche visuell und audiologisch ausgeprägt sind, durch die Berechnung der Licht- und Schallwellenführung in einer abgegrenzten Umgebung durch die Vorrichtung ergänzt werden,
- wobei die Licht- und Schallwellenführung mit Hilfe eines vorgebbaren und/oder simulierbaren 3D-Metamodells der abgegrenzten Umgebung berechnet wird, das einen zweiten Umgebungsbereich mit darin angeordneten Objekten, den ersten Umgebungsbereich mit dem mindestens einem abgebildeten Objekt und einen oder mehrere identifizierbare licht- und schalldurchlässige Bereiche zwischen dem zweiten und dem ersten Umgebungsbereich umfasst, wobei der erste Umgebungsbereich einen Innenbereich einer solchen abgegrenzten Umgebung umfasst und der zweite Umgebungsbereich einen Außenbereich der abgegrenzten Umgebung umfasst,
- wobei zur Berechnung der Licht- und Schallwellenführung Lichtquellen im zweiten Umgebungsbereich, eine wetterbedingte Helligkeit im zweiten Umgebungsbereich zu einer vorgebbaren und/oder simulierten Tages- und Jahreszeit und Geräusche von Geräuschquellen im zweiten Umgebungsbereich zu einer vorgebbaren und/oder simulierten Tages- und Jahreszeit, der Licht- und/oder -Schalleinfallswinkel durch den oder die licht- und/oder schalldurchlässigen Bereiche auf das mindestens eine Objekt sowie Lichtintensität von weiteren Lichtquellen und Geräuschstärke von weiteren Geräuschquellen im ersten Umgebungsbereich einbezogen werden, wobei Wetterdaten berücksichtigt werden, welche die wetterbedingte Helligkeit beeinflussen und Geräusche von Geräuschquellen im zweiten Umgebungsbereich dämpfen,
wobei das 3D-Metamodell als vollständiger oder Teil-Wissensgraph dargestellt ist, welcher mindestens einen Zweig von jenen, den Wissensgraphen - durch Verbindung enthaltener Knoten gebildeten - bildenden Zweigen umfasst und gemeinsam mit vom 3D-Metamodell abgeleiteten geometrischen Beziehungen gespeichert wird, wobei der Wissensgraph vorab auf Grundlage einer vorbereiteten, auf digitalen Daten beruhenden Repräsentation der Umgebungsbereiche und/oder der licht- und/oder schalldurchlässigen Bereiche gebildet ist und gegebenenfalls gespeichert wird, wobei der Wissensgraph mit einem Beleuchtungsmodell mittels eines datenbasierten Lernverfahrens erweitert werden kann, wobei der Nutzer eine Rückmeldung (F) hinsichtlich seines subjektiven Sinneseindrucks von der berechneten Lichtführung für das mindestens eine Objekt an das Lernverfahren zurückgibt.

10. Computerprogrammprodukt, umfassend Befehle, die bei der Ausführung des Computerprogramms durch einen Computer diesen veranlassen, das Verfahren nach einem der vorhergehenden Verfahrensansprüche auszuführen.

11. Computerlesbares Speicher- oder Datenübertragungsmedium, umfassend Befehle, die bei der Ausführung durch einen Computer diesen veranlassen, das Verfahren nach einem der vorhergehenden Ansprüche auszuführen.

## Claims

1. Apparatus (V) for computer-aided calculation of a light and sound wave guidance in an augmented reality system (AR) with at least one object (O), comprising a computing unit (R), which represents an augmented reality with the at least one object and also sensory impressions of the at least one object on an output unit (D) of the augmented reality system for a user, wherein the computing unit is coupled to a capture device (E) for capturing a first environment region in which the at least one object is represented,
- wherein the sensory impressions, which are visually and audiologically distinctive, are supplemented by the calculation of the light and sound wave guidance in a delimited environment by the apparatus,
- wherein the light and sound wave guidance is calculated with the aid of a predefinable and/or simulable 3D meta-model of the delimited environment, said meta-model comprising a second environment region with objects arranged therein, the first environment region with the at least one depicted object, and one or more identifiable light- and sound-transmissive regions between the second and first environment regions, wherein the first environment region comprises an inner region of such a delimited environment and the second environment region comprises an outer region of the delimited environment,
- wherein for the calculation of the light and sound wave guidance, there are included light sources in the second environment region, a weather-related brightness in the second environment region at a predefinable and/or simulated time of day and season and noises from noise sources in the second environment region at a predefinable and/or simulated time of day and season, the angle of incidence of light and/or sound through the light- and sound-transmissive region(s) onto the at least one object, and also light intensity from further light sources and noise intensity from further noise sources in the first environment region, wherein account is taken of weather data which influence the weather-related brightness and attenuate noises from noise sources in the second environment region,
wherein the 3D meta-model is represented as a complete or partial knowledge graph which comprises at least one branch of those branches forming the knowledge graph - and formed by connection of contained nodes - and is stored together with geometric relationships derived from the 3D meta-model, wherein the knowledge graph is formed and, if appropriate, stored in advance on the basis of a prepared representation of the environment regions and/or of the light- and/or sound-transmissive regions that is based on digital data, wherein the knowledge graph can be extended with an illumination model by means of a data-based learning method, wherein the user returns a feedback (F) with regard to their subjective sensory impression of the calculated light guidance for the at least one object to the learning method.

2. Apparatus according to the preceding claim, **characterized in that** the time of day- and season-dependent position of the sun influences the angle of incidence of light through the light-transmissive region(s).

3. Apparatus according to either of the preceding claims, **characterized in that** the 3D meta-model adopts a meta-perspective on the stated regions outside a first environment region that is capturable by the capture device.

4. Apparatus according to any of the preceding claims, **characterized in that** the brightness and/or noises from noise sources in the first environment region are captured by the capture device.

5. Apparatus according to any of the preceding claims, **characterized in that** in the calculation of the light and sound wave guidance with respect to the at least one object, an absorption or a reflection of light and/or sound by upstream objects in the light and/or sound propagation cone through the light- and sound-transmissive region is taken into account.

6. Apparatus according to any of the preceding claims, **characterized in that** the 3D meta-model models a building in an environment, wherein the first environment region represents the inner region of the building, the second environment region represents the outer region of the building and the light- and sound-transmissive regions in the delimitation represent windows in the wall of the building.

7. Apparatus according to any of the preceding claims, **characterized in that** the 3D meta-model is represented by a building information modelling model, abbreviated to BIM.

8. Apparatus according to any of the preceding claims, **characterized in that** the 3D meta-model is represented by a point cloud.

9. Method for computer-aided calculation of a light and sound wave guidance in an augmented reality system (AR) with at least one object (O), wherein an apparatus for the computer-aided calculation comprises a computing unit (R), which represents an augmented reality with the at least one object and also sensory impressions of the at least one object on an output unit (D) of the augmented reality system for a user, wherein the computing unit is coupled to a capture device (E) for capturing a first environment region in which the at least one object is represented,
- wherein the sensory impressions, which are visually and audiologically distinctive, are supplemented by the calculation of the light and sound wave guidance in a delimited environment by the apparatus,
- wherein the light and sound wave guidance is calculated with the aid of a predefinable and/or simulable 3D meta-model of the delimited environment, said meta-model comprising a second environment region with objects arranged therein, the first environment region with the at least one depicted object, and one or more identifiable light- and sound-transmissive regions between the second and first environment regions, wherein the first environment region comprises an inner region of such a delimited environment and the second environment region comprises an outer region of the delimited environment,
- wherein for the calculation of the light and sound wave guidance, there are included light sources in the second environment region, a weather-related brightness in the second environment region at a predefinable and/or simulated time of day and season and noises from noise sources in the second environment region at a predefinable and/or simulated time of day and season, the angle of incidence of light and/or sound through the light- and/or sound-transmissive region(s) onto the at least one object, and also light intensity from further light sources and noise intensity from further noise sources in the first environment region, wherein account is taken of weather data which influence the weather-related brightness and attenuate noises from noise sources in the second environment region,
wherein the 3D meta-model is represented as a complete or partial knowledge graph which comprises at least one branch of those branches forming the knowledge graph - and formed by connection of contained nodes - and is stored together with geometric relationships derived from the 3D meta-model, wherein the knowledge graph is formed and, if appropriate, stored in advance on the basis of a prepared representation of the environment regions and/or of the light- and/or sound-transmissive regions that is based on digital data, wherein the knowledge graph can be extended with an illumination model by means of a data-based learning method, wherein the user returns a feedback (F) with regard to their subjective sensory impression of the calculated light guidance for the at least one object to the learning method.

10. Computer program product, comprising instructions which, when the computer program is executed by a computer, cause the latter to execute the method according to any of the preceding method claims.

11. Computer-readable storage or data transmission medium, comprising instructions which, when executed by a computer, cause the latter to execute the method according to any of the preceding claims.

## Revendications

1. Dispositif (V) pour le calcul assisté par ordinateur d'un guidage d'ondes lumineuses et sonores dans un système de réalité augmentée (*Augmented-Reality-System,* AR) avec au moins un objet (O), lequel dispositif comporte une unité de calcul (R) qui représente une réalité augmentée avec l'au moins un objet ainsi que des impressions sensorielles issues de l'au moins un objet sur une unité de sortie (D) du système de réalité augmentée pour un utilisateur, dans lequel l'unité de calcul est couplée à une installation de détection (E) pour la détection d'une première zone environnante dans laquelle l'au moins un objet est représenté,
- dans lequel les impressions sensorielles, lesquelles sont marquées visuellement et audiologiquement, sont complétées par le biais du calcul du guidage d'ondes lumineuses et sonores dans un environnement délimité par le biais du dispositif,
- dans lequel le guidage d'ondes lumineuses et sonores est calculé à l'aide d'un métamodèle 3D pouvant être prédéfini et/ou simulé de l'environnement délimité, lequel métamodèle 3D comporte une deuxième zone environnante avec des objets disposés à l'intérieur de celle-ci, la première zone environnante avec l'au moins un objet illustré et une ou plusieurs zones laissant passer la lumière et le son identifiables entre la deuxième et la première zone environnante, dans lequel la première zone environnante comporte une zone interne d'un tel environnement délimité et la deuxième zone environnante comporte une zone externe de l'environnement délimité,
- dans lequel, pour le calcul du guidage d'ondes lumineuses et sonores, des sources de lumière sont intégrées dans la deuxième zone environnante, une luminosité liée aux conditions météorologiques est intégrée dans la deuxième zone environnante à une heure de la journée et une période de l'année pouvant être prédéfinies et/ou simulées et des bruits issus de sources de bruit sont intégrés dans la deuxième zone environnante à une heure de la journée et une période de l'année pouvant être prédéfinies et/ou simulées, l'angle d'incidence de la lumière et/ou du son à travers la ou les zones laissant passer la lumière et le son sur l'au moins un objet ainsi que l'intensité lumineuse issue de sources de lumière supplémentaires et la puissance acoustique issue de sources de bruit supplémentaires sont intégrés dans la première zone environnante, dans lequel des données météorologiques sont prises en compte, lesquelles influencent la luminosité liée aux conditions météorologiques et atténuent les bruits issus de sources de bruit dans la deuxième zone environnante,
dans lequel le métamodèle 3D est représenté sous la forme d'un graphe de connaissances complet ou partiel, lequel comporte au moins une branche parmi les branches formant le graphe de connaissances - formées par liaison de nœuds contenus et est stocké conjointement avec des relations géométriques dérivées du métamodèle 3D, dans lequel le graphe de connaissances est formé préalablement sur la base d'une représentation préparée, fondée sur des données numériques, des zones environnantes et/ou des zones laissant passer la lumière et/ou le son et est éventuellement stocké, dans lequel le graphe de connaissances peut être augmenté avec un modèle d'éclairage au moyen d'un procédé d'apprentissage basé sur des données, dans lequel l'utilisateur renvoie au procédé d'apprentissage un retour (F) concernant son impression sensorielle subjective issue du guidage de lumière calculé pour l'au moins un objet.

2. Dispositif selon la revendication précédente, **caractérisé en ce que** la position du soleil dépendant de l'heure de la journée et de la période de l'année influence l'angle d'incidence de la lumière à travers la ou les zones laissant passer la lumière.

3. Dispositif selon l'une des revendications précédentes, **caractérisé en ce que** le métamodèle 3D adopte une métaperspective sur lesdites zones en dehors d'une première zone environnante détectable par le biais de l'installation de détection.

4. Dispositif selon l'une des revendications précédentes, **caractérisé en ce que** la luminosité et/ou des bruits issus de sources de bruit sont détectés dans la première zone environnante par l'installation de détection.

5. Dispositif selon l'une des revendications précédentes, **caractérisé en ce que**, lors du calcul du guidage d'ondes lumineuses et sonores en ce qui concerne l'au moins un objet, une absorption ou respectivement une réflexion de lumière et/ou de son à travers des objets disposés en amont est prise en compte tout au long du cône de propagation de la lumière et/ou du son à travers la zone laissant passer la lumière et le son.

6. Dispositif selon l'une des revendications précédentes, **caractérisé en ce que** le métamodèle 3D modélise un bâtiment dans un environnement, dans lequel la première zone environnante représente la zone interne du bâtiment, la deuxième zone environnante représente la zone externe du bâtiment, et les zones laissant passer la lumière et le son représentent à la délimitation des fenêtres dans le mur du bâtiment.

7. Dispositif selon l'une des revendications précédentes, **caractérisé en ce que** le métamodèle 3D est représenté par le biais d'un modèle de modélisation d'informations de bâtiment (*Building-Information-Modelling-Modell*), abrégé en BIM.

8. Dispositif selon l'une des revendications précédentes, **caractérisé en ce que** le métamodèle 3D est représenté par le biais d'un nuage de points.

9. Procédé pour le calcul assisté par ordinateur d'un guidage d'ondes lumineuses et sonores dans un système de réalité augmentée (*Augmented-Reality-System,* AR) avec au moins un objet (O), dans lequel un dispositif pour le calcul assisté par ordinateur comporte une unité de calcul (R) qui représente une réalité augmentée avec l'au moins un objet ainsi que des impressions sensorielles issues de l'au moins un objet sur une unité de sortie (D) du système de réalité augmentée pour un utilisateur, dans lequel l'unité de calcul est couplée à une installation de détection (E) pour la détection d'une première zone environnante dans laquelle l'au moins un objet est représenté,
- dans lequel les impressions sensorielles, lesquelles sont marquées visuellement et audiologiquement, sont complétées par le biais du calcul du guidage d'ondes lumineuses et sonores dans un environnement délimité par le biais du dispositif,
- dans lequel le guidage d'ondes lumineuses et sonores est calculé à l'aide d'un métamodèle 3D pouvant être prédéfini et/ou simulé de l'environnement délimité, lequel métamodèle 3D comporte une deuxième zone environnante avec des objets disposés à l'intérieur de celle-ci, la première zone environnante avec l'au moins un objet illustré et une ou plusieurs zones laissant passer la lumière et le son identifiables entre la deuxième et la première zone environnante, dans lequel la première zone environnante comporte une zone interne d'un tel environnement délimité et la deuxième zone environnante comporte une zone externe de l'environnement délimité,
- dans lequel, pour le calcul du guidage d'ondes lumineuses et sonores, des sources de lumière sont intégrées dans la deuxième zone environnante, une luminosité liée aux conditions météorologiques est intégrée dans la deuxième zone environnante à une heure de la journée et une période de l'année pouvant être prédéfinies et/ou simulées et des bruits issus de sources de bruit sont intégrés dans la deuxième zone environnante à une heure de la journée et une période de l'année pouvant être prédéfinies et/ou simulées, l'angle d'incidence de la lumière et/ou du son à travers la ou les zones laissant passer la lumière et/ou le son sur l'au moins un objet ainsi que l'intensité lumineuse issue de sources de lumière supplémentaires et la puissance acoustique issue de sources de bruit supplémentaires sont intégrés dans la première zone environnante, dans lequel des données météorologiques sont prises en compte, lesquelles influencent la luminosité liée aux conditions météorologiques et atténuent les bruits issus de sources de bruit dans la deuxième zone environnante,
dans lequel le métamodèle 3D est représenté sous la forme d'un graphe de connaissances complet ou partiel, lequel comporte au moins une branche parmi les branches formant le graphe de connaissances - formées par liaison de nceuds contenus et est stocké conjointement avec des relations géométriques dérivées du métamodèle 3D, dans lequel le graphe de connaissances est formé préalablement sur la base d'une représentation préparée, fondée sur des données numériques, des zones environnantes et/ou des zones laissant passer la lumière et/ou le son et est éventuellement stocké, dans lequel le graphe de connaissances peut être augmenté avec un modèle d'éclairage au moyen d'un procédé d'apprentissage basé sur des données, dans lequel l'utilisateur renvoie au procédé d'apprentissage un retour (F) concernant son impression sensorielle subjective issue du guidage de lumière calculé pour l'au moins un objet.

10. Produit de programme informatique, comportant des instructions, lesquelles, lors de l'exécution du programme informatique par le biais d'un ordinateur, amènent celui-ci à exécuter le procédé selon l'une des revendications de procédé précédentes.

11. Support de stockage ou de transmission de données lisible par ordinateur, comportant des instructions, lesquelles, lors de l'exécution par le biais d'un ordinateur, amènent celui-ci à exécuter le procédé selon l'une des revendications précédentes.
